# FASCICULE DE BREVET EUROPEEN

(11) **EP 1 219 758 B1**
(45) Date de publication et mention de la délivrance du brevet: **21.06.2006**
(21) Numéro de dépôt: 01420216.2
(22) Date de dépôt: 30.10.2001
(51) Int. Cl.: E04D 3/38, E04D 3/366, F16B 5/00

(54) **Dispositif de liaison étanche pour panneaux composites de couverture**
Wasserdichte Verbindungsvorrichtung für Verbunddachplatten
Impermeable coupling device for composite roof panels

(30) Priorité: 06.11.2000 FR 0014427
(43) Date de publication de la demande: 03.07.2002
(73) Titulaire: S.I.P. SAS, 13100 Aix en Provence (FR)
(72) Inventeur: Krass, Reinaldo, 20146 Milano (IT); Saracco-Ollagnier, Jean Claude, 13320 Bouc-Bel-Air (FR)
(74) Mandataire: Maureau, Philippe

(56) Documents cités:
- EP-A- 0 960 990
- DE-A- 2 343 049
- FR-A- 2 678 302
- FR-A- 2 710 374

## Description

L'invention concerne un dispositif de liaison étanche pour une couverture.

Elle concerne plus particulièrement les couvertures comprenant, d'une part, des panneaux avec une âme en mousse rigide de matière plastique et deux parements rigides avec retour contre une partie des chants longitudinaux, panneaux dont les chants longitudinaux en vis à vis sont chacun pourvu d'une rainure longitudinale ménagée dans la mousse et comportant un fond et deux faces latérales parallèles, et d'autre part, un profilé extrudé de liaison s'encastrant pour moitié dans chacune des rainures en vis à vis.

Ces panneaux composites, utilisés pour constituer une couverture, par exemple de véranda, de terrasse, de toiture ou de balcon, sont liés l'un à l'autre par un dispositif de jonction et de liaison comprenant des moyens empêchant que les eaux de ruissellement ou de condensation puissent circuler entre deux panneaux contigus et tomber dans le local sous jacent.

Pour remédier à cela, le document DE-2454666 met en oeuvre un profilé conformé avec une rainure longitudinale supérieure formant gouttière de canalisation des eaux. L'usage montre que cela est insuffisant et qu'il faut rajouter d'autres moyens pour éviter que l'eau s'infiltre entre les bords longitudinaux du profilé et parviennent dans les rainures des panneaux.

La demande de brevet français FR-A-2633019 décrit un dispositif de jonction étanche de panneaux mettant en oeuvre un profilé en C formant gouttière, et dont l'étanchéité est complétée par des cordons de joints en matière plastique déposés à la main, respectivement contre le fond des rainures ménagées dans les panneaux et contre les retours coudés des parements bordant l'un des panneaux. Ce mode d'étanchéité est coûteux car il nécessite une intervention manuelle pour mettre en place le joint d'étanchéité sur toute la longueur du panneau.

Dans la demande de brevet français FR-A-2710374, l'étanchéité est assurée, d'une part, par des profilés d'habillage des chants du panneau qui, en combinaison avec un profilé de jonction, multiplient les espaces de drainage, et d'autre part, par un profilé de faîtage. Ce profilé est engagé manuellement à la fin de la pose des panneaux et a pour inconvénient de nécessiter une intervention manuelle augmentant le temps de pose, mais aussi de ne pas permettre de disposer les panneaux bord à bord, en formant ainsi une fente visible au-dessous des panneaux et déparant la face inférieure de la couverture.

Une autre solution, décrite dans la demande de brevet français FR-A-2 777 323, multiplie également les zones de drainage en combinant des profilés d'habillage des chants avec un profilé de jonction et remplace le profilé de faîtage par des joints prévus à demeure sur les profilés de chants. Ces joints assurent une bonne étanchéité, mais par contre sont très sensibles à l'arrachage lors du stockage et des manipulations des panneaux, puisqu'ils sont en saillie des chants de ces panneaux.

La présente invention a pour objet de fournir un dispositif de liaison étanche qui remédie aux inconvénients des dispositifs actuels et, en particulier, réduit le temps de pose, tout en garantissant l'étanchéité obtenue par la suppression des risques de détérioration des joints.

A cet effet, dans le dispositif selon l'invention le profilé de liaison présente, en section transversale, la forme générale d'un E couché dont la nervure constituant la barre centrale du E est munie, à son extrémité libre, d'un joint élastiquement déformable, saillant hors du profilé et vers le haut, et apte à venir en contact élastique contre les chants opposés de deux panneaux contigus.

Avec ce dispositif, les chants des panneaux ne nécessitent aucun profilé d'habillage ou aucun joint, ce qui supprime tout risque de détérioration des moyens d'étanchéité lors du stockage et des manipulations de ces panneaux. Ces moyens d'étanchéité sont portés exclusivement par le profilé de jonction qui, plus petit et plus facile à manipuler, peut être protégé plus aisément. Lors de la pose de deux panneaux contigus, consistant à placer le profilé de jonction dans la rainure longitudinale du panneau déjà posé, puis à mettre en place le panneau suivant en emboîtant sa rainure sur la partie du profilé saillant du panneau opposé, et enfin à rapprocher les deux panneaux jusqu'à pratiquement contact des retours de leur parement, le joint d'étanchéité saillant de la lame centrale du profilé vient automatiquement en contact avec les chants des panneaux pour assurer l'étanchéité, sans qu'il y ait besoin d'avoir recours à d'autres moyens, tels que profilé de faîtage ou cordon d'étanchéité déposé manuellement.

Dans une forme d'exécution, chacune des ailes du profilé est prolongée en direction de la barre centrale du E par un retour coudé, et ce retour coudé est muni d'un joint d'étanchéité, élastiquement déformable, faisant saillie de son bord libre, vers le haut et hors du profilé, pour venir en contact contre la face latérale correspondante de la rainure longitudinale du panneau.

En raison de sa position, ce joint se met automatiquement en position lors de l'engagement du profilé dans l'une des rainures, et lors de l'engagement sur lui, de la rainure de l'autre panneau.

Avantageusement, pour augmenter encore l'étanchéité face à un ruissellement horizontal de l'eau, le profilé comporte, près de chacun des retours coudés de ses ailes, une nervure intérieure, parallèle au retour mais plus long que lui et portant également un joint d'étanchéité, ledit joint venant en contact élastique contre la même face que le joint de ce retour, mais devant ce joint par rapport au sens possible d'écoulement de l'eau.

Avec cet agencement, les éventuelles eaux de ruissellement, non retenues par le joint de la lame centrale, sont évacuées par les gouttières formées de part et d'autre de cette lame, mais aussi par les chambres de drainage délimitées, verticalement, entre le retour coudé et la nervure interne et, horizontalement, entre l'aile correspondante du profilé et les joints.

D'autres caractéristiques et avantages ressortiront de la description qui suit en référence au dessin schématique annexé représentant, à titre d'exemple, deux formes d'exécution du dispositif selon l'invention.
Figure 1 est une vue de face en bout d'une première forme d'exécution du profilé de jonction,
Figure 2 est une vue partielle en coupe transversale de deux panneaux composites, réunis par le dispositif de liaison étanche de figure 1,
Figure 3 est une vue de face en bout d'une autre forme d'exécution du profilé de jonction,
Figure 4 est une vue similaire à la figure 2 montrant la jonction de deux panneaux composites avec le profilé de jonction de figure 3.

Dans ce dessin, les références numériques P1 et P2 désignent, de manière générale, deux panneaux composites comprenant chacun une âme 2 en mousse rigide de matière plastique, emprisonnée entre deux parements rigides 3. Ces parements sont munis de retours 4 rabattus contre les chants de la mousse 2. Chaque panneau comporte une rainure longitudinale 5 composée d'un fond 5a et de deux faces latérales, respectivement supérieure 5b et inférieure 5c.

Selon l'invention, le profilé de jonction 6 présente, en section transversale, la forme générale d'un E couché, et est donc composé d'un dos 7, de deux ailes longitudinales de bordure 8, et d'une lame centrale 9 formant la barre du E.

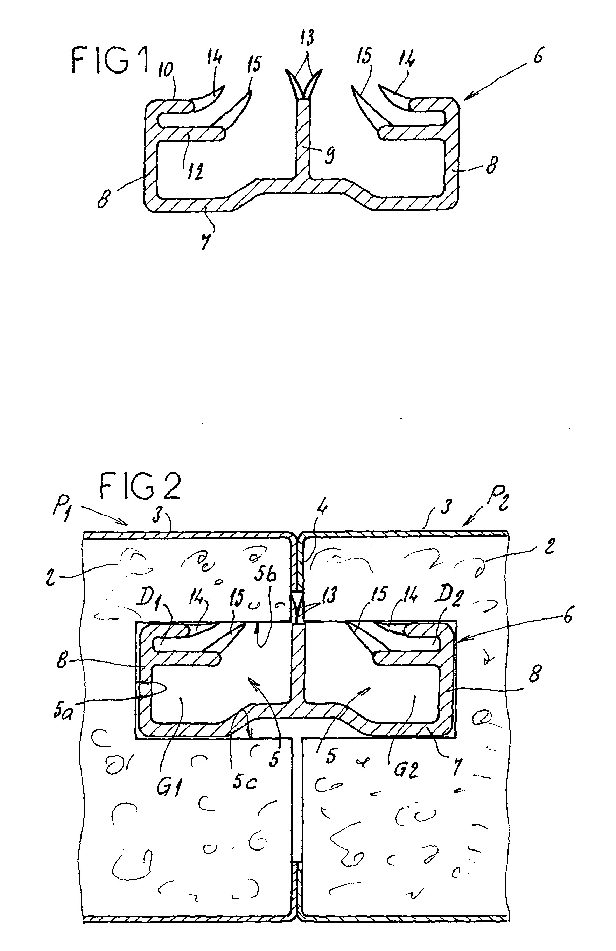

Dans la forme d'exécution représentée aux figures 1 et 2, chacune des ailes 8 est solidaire, d'une part, d'un retour coudé 10 tourné en direction de la lame 9, et d'autre part, d'une nervure interne 12, parallèle au retour coudé 10, mais plus long que lui et également tourné en direction de la lame centrale 9.

La lame centrale 9 est munie à son extrémité libre d'un joint d'étanchéité représenté à la figure 1 comme étant constitué par deux lèvres 13, faisant saillie vers le haut et hors du profilé, mais pouvant être constituées par tout autre joint déformable élastiquement, et par exemple par un joint tubulaire.

De même, lorsque les ailes 8 sont munies de retours 10 et de nervures 12, les bords de ces retours et nervures sont chacun munis d'un joint déformable élastiquement, tel que les lèvres 14 et 15 montrées à la figure 1. Ces lèvres sont en saillie vers le haut et sont destinées à venir en contact avec la même face d'appui. Ces lèvres peuvent être remplacées par tout autre joint d'étanchéité, apte à se déformer élastiquement lors de l'introduction du profilé dans une rainure 5 d'un panneau, ou lors de l'introduction de la rainure d'un panneau sur lui.

Lorsqu'un panneau est posé, par exemple celui P1 à la figure 2, le profilé de jonction 6 est engagé dans la rainure 5 de ce panneau P1 jusqu'à contact de son aile 8 contre le fond 5a de ladite rainure. Durant cet engagement, les deux lèvres 14 et 15 viennent en contact avec la face latérale supérieure 5b de la rainure 5, c'est-à-dire sur la mousse, brute d'usinage. Simultanément, et quand la lame centrale 9 a une hauteur égale à celle du profilé, comme montré aux figures 1 et 2, l'une des lèvres 13 vient en contact contre la face usinée de la mousse délimitant le chant du panneau P1.

A ce stade du montage, le profilé est parfaitement positionné par rapport au panneau P1 et il peut être procédé à la mise en place du panneau P2. Durant cette mise en place, la rainure 5 du panneau P2 est engagée sur la partie dépassant du profilé 6 jusqu'à ce que les retours coudés 4 du parement 3 de ce panneau P2 viennent en contact avec les retours du panneau P1. Durant ce mouvement, les lèvres 13, 14 et 15 de la partie du profilé qui est à droite sur la figure 2, se mettent en position et viennent en contact, respectivement, avec le chant en mousse du panneau P2 et avec la face latérale 5b de la rainure 5 du panneau P2.

A la fin de ce montage, et comme le montre bien la figure 2, d'une part, les panneaux sont disposés de manière jointive, ce qui supprime tout aspect inesthétique au-dessous du panneau, et réduit les infiltrations d'eau sur le dessus du panneau, par réduction de la section de passage entre deux retours 4 des panneaux.

L'eau, qui pourrait néanmoins s'infiltrer, est d'abord arrêtée par le joint 13. Si le ruissellement continue le long des faces latérales supérieures 5b des rainures 5, il est d'abord arrêté par les joints 15 qui orientent l'évacuation par les deux gouttières G1, G2, formées dans le profilé 6, et à défaut, par les joints 14 qui assurent l'évacuation par les chambres de drainage D1, D2. Celles-ci sont délimitées, verticalement, entre le retour 10 et la nervure 12, et, horizontalement, d'un côté par l'aile 8, et de l'autre côté par les joints 14 et 15. Compte tenu de la triple barrière de joints 13, 14 et 15, l'eau a très peu de risque d'aller au-delà du joint 14 pour s'infiltrer entre le profilé et les parois de la nervure.

On notera que ce dispositif de jonction et de liaison étanche ne met en oeuvre qu'un seul profilé de jonction, nécessite un temps de pose très réduit, sans recours à aucun autre moyen d'étanchéité et permet d'obtenir une jonction bord à bord des panneaux améliorant l'esthétique de la face inférieure de la couverture.

Les joints, qui ont été représentés comme étant des joints à lèvres, peuvent être constitués par des corps tubulaires en matériau élastiquement déformable. Ces joints sont obtenus par coextrusion d'une matière plastique déformable élastiquement, en même temps qu'est extrudé le profilé en matière plastique rigide.

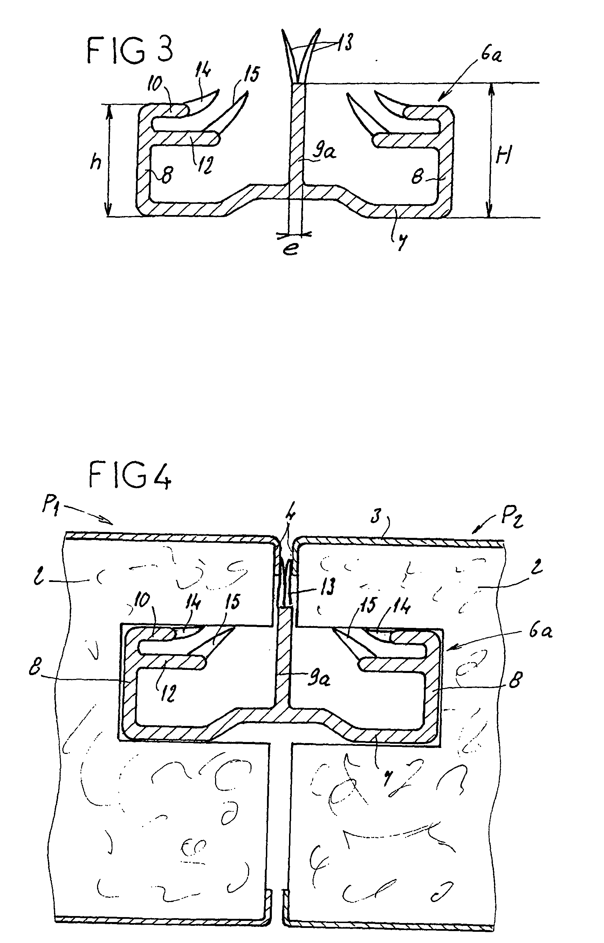

La forme d'exécution représentée aux figures 3 et 4 se différencie de la précédente par le fait que la lame centrale 9a du profilé 6a a une hauteur H qui est supérieure à la hauteur h du profilé et une épaisseur e qui est au plus égale à deux fois l'épaisseur des parements 3 des panneaux, donc de leurs retours 4. La lame 9a est équipée d'un joint ayant une longueur déterminée pour venir en contact avec les retours 4 des parements 3 des panneaux P1, P2 et, par exemple comme représenté, d'un joint à deux lèvres 13a, ce joint pouvant aussi présenter toute autre forme.

Cette solution permet d'éloigner la première zone d'étanchéité des rainures 5 ménagées dans les panneaux P1, P2.

## Revendications

1. Dispositif de liaison étanche pour une couverture, comprenant, d'une part, des panneaux composites (P1, P2) avec une âme (2) en mousse rigide de matière plastique et deux parements rigides (3) avec retour (4) contre une partie des chants longitudinaux, panneaux dont les chants longitudinaux en vis à vis sont chacun pourvu d'une rainure longitudinale (5) ménagée dans la mousse et comportant un fond (5a) et deux faces latérales (5b, 5c) parallèles, et d'autre part, un profilé extrudé de liaison (6) s'encastrant pour moitié dans chacune des rainures (5) en vis à vis, **caractérisé en ce que** le profilé de liaison (6) présente, en section transversale, la forme générale d'un E couché dont la lame (9) constituant la barre centrale du E est munie, à son extrémité libre, d'un joint (13) élastiquement déformable, saillant hors du profilé (6) et vers le haut, et apte à venir en contact élastique contre les chants opposés de deux panneaux contigus (P1, P2).

2. Dispositif selon la revendication 1, **caractérisé en ce que** chacune des ailes (8) du profilé (6) est prolongée en direction de la lame centrale (9) du E par un retour coudé (10), et ce retour coudé est muni d'un joint d'étanchéité élastiquement déformable (14), faisant saillie de son bord libre, vers le haut et hors du profilé, pour venir en contact contre la face latérale supérieure (5b) de la rainure longitudinale (5) du panneau.

3. Dispositif selon la revendication 2, **caractérisé en ce que** le profilé (6) comporte, près de chacun des retours coudés (10) de ses ailes (8), une nervure intérieure (12), parallèle au retour (10) mais plus long que lui et portant également un joint d'étanchéité (15), ledit joint venant en contact élastique contre la même face (5b) que le joint (14) de ce retour, mais devant ce joint (14) par rapport au sens possible d'écoulement de l'eau.

4. Dispositif selon la revendication 1, **caractérisé en ce que** la lame centrale (9) du profilé de jonction (6) a une hauteur au moins égale à celle du profilé.

5. Dispositif selon la revendication 1, **caractérisé en ce que** la lame centrale (9) du profilé de jonction (6) a une hauteur supérieure à celle de ce profilé et une épaisseur au plus égale à deux fois l'épaisseur des parements (3) d'un panneau (P1, P2), pour s'insérer entre l'intervalle ménagé entre les mousses (2) de deux panneaux contigus (P1, P2).

6. Dispositif selon la revendication 1, **caractérisé en ce que** les joints d'étanchéité (13, 14, 15) sont réalisés dans une matière plastique déformable élastiquement par coextrusion, en même temps qu'est réalisé le profilé (6) en matière plastique rigide.

## Claims

1. Impermeable coupling device for a roof covering, comprising, on the one hand, composite panels (P1, P2) with a core (2) of rigid plastic foam and two rigid facings (3) with a return (4) against a part of the longitudinal sides, the mutually opposite longitudinal sides of which panels each being provided with a longitudinal groove (5) formed in the foam and comprising a bottom (5a) and two parallel lateral faces (5b, 5c), and, on the other hand, an extruded coupling profile (6) which fits halfway into each of the mutually opposite grooves (5), **characterized in that** the coupling profile (6) has, in cross section, the general shape of an E on its back, the prong (9) of which, which constitutes the central bar of the E, is provided, at its free end, with an elastically deformable seal (13) which projects upwardly from the profile (6) and is able to come into elastic contact with the opposed edges of two contiguous panels (P1, P2).

2. Device according to Claim 1, **characterized in that** each of the flanks (8) of the profile (6) is prolonged in the direction of the central prong (9) of the E by a bent return (10), and this bent return is provided with an elastically deformable seal (14) which protrudes from its free edge and upwardly from the profile so as to come into contact with the upper lateral face (5b) of the longitudinal groove (5) of the panel.

3. Device according to Claim 2, **characterized in that** the profile (6) comprises, close to each of the bent returns (10) of its flanks (8), an inner rib (12) which is parallel to but longer than the return (10) and which also bears a seal (15), the said seal coming into elastic contact with the same face (5b) as the seal (14) of this return, but in front of this seal (14) with respect to the possible water flow direction.

4. Device according to Claim 1, **characterized in that** the central prong (9) of the junction profile (6) has a height at least equal to the height of the profile.

5. Device according to Claim 1, **characterized in that** the central prong (9) of the junction profile (6) has a height which is greater than the height of this profile and a thickness which is at most equal to twice the thickness of the facings (3) of a panel (P1, P2) in order to be inserted between the gap formed between the foams (2) of two contiguous panels (P1, P2).

6. Device according to Claim 1, **characterized in that** the seals (13, 14, 15) are produced from an elastically deformable plastic by coextrusion at the same time as the rigid plastic profile (6) is being produced.

## Patentansprüche

1. Vorrichtung zur dichten Verbindung für eine Abdeckung, welche aufweist: einerseits Verbundplatten (P1, P2) mit einem Kern (2) aus starrem Kunststoff-Schaum und zwei starren Verkleidungen (3) mit einer Umbiegung (4) gegen einen Teil der Längskanten, wobei die einander gegenüberliegenden Längskanten der Platten jeweils mit einer Längsnut (5) versehen sind, die in den Schaum eingearbeitet ist und einen Boden (5a) sowie zwei parallele Seitenflächen (5b, 5c) besitzt; und andererseits ein extrudiertes Verbindungsprofil (6), das zur Hälfte in jede der gegenüberliegenden Nuten (5) hineinpasst, **dadurch gekennzeichnet, dass** das Verbindungsprofil (6) im Querschnitt im Wesentlichen die Form eines liegenden E hat, bei dem die den mittigen Balken des E bildende Lamelle (9) an ihrem freien Ende mit einer elastisch verformbaren Dichtung (13) ausgestattet ist, die von dem Profil (6) nach oben herausragt und mit den entgegengesetzten Kanten der beiden benachbarten Platten (P1, P2) elastisch in Kontakt gelangen kann.

2. Vorrichtung nach Anspruch 1, **dadurch gekennzeichnet, dass** jeder der Schenkel (8) des Profils (6) in der Richtung der mittigen Lamelle (9) des E durch eine abgewinkelte Umbiegung (10) verlängert ist, wobei diese abgewinkelte Umbiegung mit einer elastisch verformbaren Abdichtung (14) ausgestattet ist, die von deren freiem Rand nach oben hin und aus dem Profil heraus hervorsteht, um gegen die obere Seitenfläche (5b) der Längsrille (5) der Platte in Kontakt zu gelangen.

3. Vorrichtung nach Anspruch 2, **dadurch gekennzeichnet, dass** das Profil (6) nahe bei jeder der abgewinkelten Umbiegungen (10) seiner Schenkel (8) eine innere Rippe (12) besitzt, die parallel zu der Umbiegung (10) aber länger als diese ist und ebenfalls eine Abdichtung (15) trägt, die gegen dieselbe Fläche (5b) wie die Abdichtung (14) dieses Umschlags, jedoch vor dieser Abdichtung (14) bezüglich der möglichen Fließrichtung des Wassers, in Kontakt gelangt.

4. Vorrichtung nach Anspruch 1, **dadurch gekennzeichnet, dass** die mittige Lamelle (9) des Verbindungsprofils (6) eine Höhe hat, die mindestens gleich groß wie diejenige des Profils ist.

5. Vorrichtung nach Anspruch 1, **dadurch gekennzeichnet, dass** die mittige Lamelle (9) des Verbindungsprofils (6) eine Höhe hat, die größer als diejenige des Profils ist, und eine Dicke hat, die höchstens gleich groß wie die doppelte Dicke der Verkleidungen (3) einer Platte (P1, P2) ist, um in den zwischen den Schäumen (2) der beiden aneinanderliegenden Tafeln (P1, P2) vorgesehen Zwischenraum eingefügt zu werden.

6. Vorrichtung nach Anspruch 1, **dadurch gekennzeichnet, dass** die Dichtungen bzw. Abdichtungen (13, 14, 15) zur gleichen Zeit wie das Profil (6) aus starrem Kunststoffmaterial durch Coextrusion aus einem elastisch verformbaren Material gebildet werden.
